(19) Europäisches Patentamt
European Patent Office
Office européen des brevets

(11) EP 2 425 597 B1

(12) FASCICULE DE BREVET EUROPEEN

(45) Date de publication et mention
de la délivrance du brevet:
**23.01.2013 Bulletin 2013/04**

(51) Int Cl.:
***H04L 27/26*** *(2006.01)*

(21) Numéro de dépôt: **10714318.2**

(22) Date de dépôt: **22.04.2010**

(86) Numéro de dépôt international:
**PCT/EP2010/055351**

(87) Numéro de publication internationale:
**WO 2010/124986 (04.11.2010 Gazette 2010/44)**

(54) **MÉTHODE D'IDENTIFICATION AVEUGLE D'UN SIGNAL DE TYPE OFDM CONTENU DANS UN SIGNAL REÇU PAR UN SYSTÈME DE TÉLÉCOMMUNICATION**

VERFAHREN ZUR BLINDEN IDENTIFIZIERUNG EINES OFDM SIGANLS INNERHALB EINES VON EINEM KOMMUNIKATIONSSYSTEM EMFANGENEN GESAMTSIGNALS

METHOD FOR BLIND IDENTIFICATION OF AN OFDM SIGNAL CONTAINED IN A SIGNAL RECEIVED BY A TELECOMMUNICATION SYSTEM

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **29.04.2009 FR 0952818**

(43) Date de publication de la demande:
**07.03.2012 Bulletin 2012/10**

(73) Titulaires:
• **Commissariat à l'Énergie Atomique et aux Énergies Alternatives**
**75015 Paris (FR)**
• **Telecom Paris Tech**
**75013 Paris (FR)**

(72) Inventeurs:
• **BOUZEGZI, Abdelaziz**
**F-69003 Lyon (FR)**
• **CIBLAT, Philippe**
**F-75020 Paris (FR)**
• **JALLON, Pierre**
**F-38100 Grenoble (FR)**

(74) Mandataire: **Ilgart, Jean-Christophe et al**
**BREVALEX**
**95 rue d'Amsterdam**
**75378 Paris Cedex 8 (FR)**

(56) Documents cités:
**US-A- 5 515 300**

• ABDELAZIZ BOUZEGZI ET AL: "A fourth-order algorithm for blind characterization of OFDM signals" IEEE 9TH WORKSHOP ON SIGNAL PROCESSING ADVANCES IN WIRELESS COMMUNICATIONS, 2008 - SPAWC 2008, 6 juillet 2008 (2008-07-06), pages 411-415, XP031345973 NJ, USA ISBN: 978-1-4244-2045-2 cité dans la demande

• ZHENHUI SHEN ET AL: "Multiple parameters estimation simultaneously for DS-SS/BPSK signal based on fourth-order cumulant 2D slice" IEEE INTERNAT IONAL CONFERENCE ON COMMUNICATIONS, CIRCUITS AND SYSTEMS, 2004 - ICCCAS 2004., 27 juin 2004 (2004-06-27), - 29 juin 2009 (2009-06-29) pages 867-870Vol.2, XP010732043 NJ, USA ISBN: 978-0-7803-8647-1

• AKMOUCHE W: "Detection of multicarrier modulations using 4th-order cumulants" IEEE MILITARY COMMUNICATIONS CONFERENCE PROCEEDINGS - MILCOM 1999, vol. 1, 31 octobre 1999 (1999-10-31), - 3 novembre 1999 (1999-11-03) pages 432-436, XP010369572 NJ, USA ISBN: 978-0-7803-5538-5

• XIANGHONG TANG ET AL: "Identification of Wavelet Modulation Based on Gaussian Detection and Kurtosis of Power Spectrum" IEEE INTERNATIONAL CONFERENCE ON COMMUNICATIONS AND MOBILE COMPUTING - CMC '09, 6 janvier 2009 (2009-01-06), pages 181-185, XP031434650 NJ, USA ISBN: 978-0-7695-3501-2

**Description**

**DOMAINE TECHNIQUE**

La présente invention concerne une méthode d'identification aveugle d'un signal OFDM. Cette méthode trouve en particulier application pour les systèmes de télécommunication dits opportunistes dans le domaine de la radio cognitive (*Cognitive Radio*).

**ÉTAT DE LA TECHNIQUE ANTÉRIEURE**

Un terminal de télécommunication opportuniste doit connaître en permanence son environnement spectral afin d'adapter ses paramètres de transmission pour ne pas interférer avec les systèmes de télécommunication existants, dits systèmes de télécommunication primaires.

La plupart des systèmes de télécommunication primaires avec lesquels une utilisation opportuniste du spectre est envisagée sont des systèmes de télécommunication OFDM. Dès lors, il importe pour un terminal opportuniste si un signal OFDM est présent dans son environnement et, le cas échéant de déterminer les paramètres de ce signal.

La modulation OFDM est bien connue de l'état de la technique et est employée dans de nombreux systèmes de télécommunication tels que DVB-T, ADSL, Wi-Fi (IEEE 802 a/g), WiMax (IEEE 802.16). Elle présente l'avantage d'une bonne efficacité spectrale et d'une bonne protection contre les évanouissements sélectifs en fréquence.

On rappelle que dans un système OFDM, les symboles d'information à transmettre sont groupés par blocs de N symboles, où $N$ est généralement une puissance de 2, les symboles OFDM étant obtenus en effectuant une IFFT (*Inverse Fast Fourier Transform*) sur lesdits blocs de symboles d'information. Généralement, un préfixe cyclique est rajouté au début de chaque symbole OFDM pour absorber l'interférence inter-symbole ou ISI et faciliter l'égalisation à la réception. Le signal OFDM constitué par ces symboles OFDM peut être éventuellement ensuite translaté en fréquence.

De manière générale, le signal émis par un système OFDM peut être représenté en bande de base par :

$$s_a(t) = \frac{\sqrt{E}}{N} \sum_k g(t - kT_s) . \sum_{n=0}^{N-1} a_{k,n} e^{-2i\pi \frac{n}{NT_c}(t - DT_c - kT_s)} \qquad (1)$$

où $T_s = (N+D)T_c$ est la durée d'un symbole OFDM, $E$ est la puissance du signal, $N$ est le nombre de porteuses du multiplex OFDM, $a_{k,n}$ sont les symboles d'information relatifs au bloc $k$, appartenant à un alphabet de modulation $M$-aire, typiquement BPSK, QPSK ou QAM, $1/T_c$ est le débit des symboles d'information où $T_c$ est le temps « bribe » ou « chip », $D$ est la taille du préfixe cyclique exprimée en nombre de bribes , $g(t)$ est une impulsion de mise en forme des symboles OFDM ayant un support temporel $[0,(N+D)T_c]$ destiné à apodiser le spectre du signal.

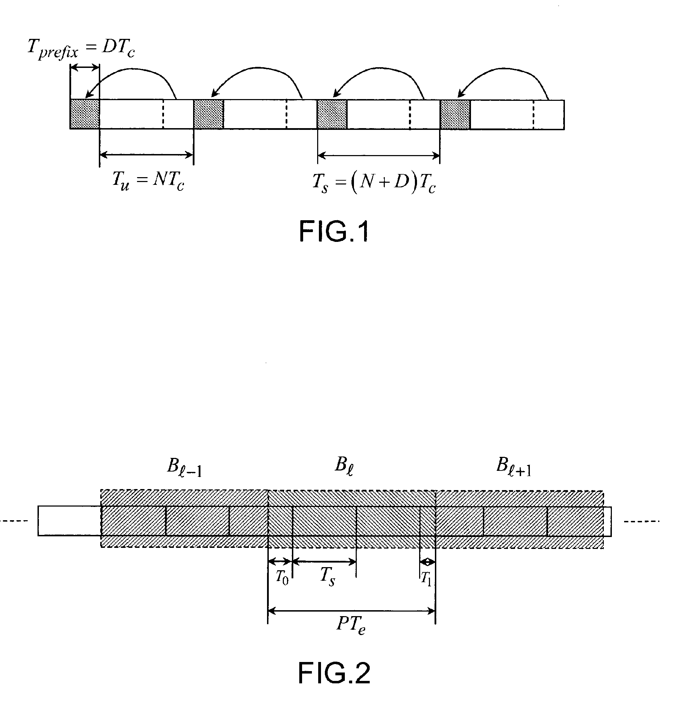

On a représenté de manière schématique un signal OFDM en Fig. 1. Il est constitué d'une séquence de symboles OFDM, chaque symbole présentant une durée totale $(N+D)T_c$ dont une durée utile $NT_c$ et un intervalle de garde de durée $T_{prefix}=DT_c$, dans lequel se trouve le préfixe cyclique. On rappelle que, de manière classique, le préfixe cyclique est une copie de la fin du symbole OFDM à l'intérieur de l'intervalle de garde. Dans certains systèmes OFDM, les préfixes cycliques sont simplement omis, autrement dit les parties utiles des symboles sont séparées par des intervalles de garde « vides ».

Les méthodes connues d'identification d'un signal OFDM exploitent pour la plupart les propriétés statistiques du signal induites par la présence du préfixe cyclique. Toutefois ces méthodes s'avèrent peu performantes lorsque la longueur du préfixe cyclique est faible par rapport à la durée utile du symbole OFDM, ce qui est très commun en pratique, notamment dans les systèmes WiMax et DVB-T. En outre, ces méthodes donnent de mauvais résultats lorsque les canaux de transmission sont de type multi-trajet.

Une méthode d'identification utilisant la périodicité temporelle de la fonction d'autocorrélation du signal OFDM a été décrite dans l'article d'A. Bouzegzi et al. intitulé « A second order statistics based algorithm for blind recognition of OFDM based systems » publié dans IEEE Global Telecommunications Conference (Globecom), Nov. 2008. Si cette méthode présente une grande robustesse aux faibles tailles de préfixe cyclique et aux canaux multi-trajets, elle nécessite cependant la présence d'un préfixe cyclique dans les symboles OFDM.

Plusieurs méthodes d'identification ont été récemment proposées pour s'affranchir de la présence d'un préfixe cyclique, notamment celle décrite dans l'article d'A. Bouzegzi et al. intitulé « A fourth-order algorithm for characterization of OFDM signals » publié dans IEEE Workshop on Signal Processing Advances in Wireless Communications (SPAWC), Juillet 2008. Cette méthode, basée sur un critère de minimisation d'entropie en sortie d'un démodulateur OFDM, nécessite une synchronisation temporelle et fréquentielle qui est difficilement compatible avec une implémentation temps réel.

Le but de la présente invention est par conséquent de proposer une méthode d'identification aveugle d' un signal OFDM qui ne dépend pas de la présence et de la nature du préfixe utilisé, notamment de son caractère cyclique, sans requérir pour autant une synchronisation temporelle et/ou fréquentielle.

Un autre but de la présente invention est de proposer une méthode d'identification de signal OFDM indépendante de la longueur du préfixe utilisé, cyclique ou non, qui soit à la fois robuste au bruit et aux multi-trajets.

## EXPOSÉ DE L'INVENTION

La présente invention est définie par une méthode d'identification de signal OFDM dans un signal reçu, selon laquelle on échantillonne le signal reçu et on le découpe en blocs de $P$ échantillons, chaque bloc ($B_\ell$) étant ensuite soumis à une transformée de Fourier pour obtenir une pluralité de symboles ($\hat{a}_\ell(f)$) à une pluralité de fréquences. Pour chaque fréquence de ladite pluralité, on calcule le kurtosis ($\kappa(f)$) d'un ensemble de symboles ($\hat{a}_\ell(f), \ell = 1,...,L$) ainsi obtenus à cette fréquence, puis l'on détermine si ledit kurtosis présente une périodicité dans le domaine fréquentiel à partir des valeurs de kurtosis calculées pour les fréquences de ladite pluralité, et l'on identifie la présence d'un signal OFDM dans le signal reçu si le kurtosis présente une telle périodicité.

Avantageusement, pour déterminer si ledit kurtosis présente une périodicité dans le domaine fréquentiel, on calcule son spectre et l'on détermine si celui-ci présente un pic spectral pour une valeur de période ($\Delta f$).

On peut alors retrancher au kurtosis sa valeur moyenne ($\bar{\kappa}$) et l'on calcule la transformée de Fourier du kurtosis ainsi centré, un pic spectral étant détecté si sa hauteur ($\alpha_P$) est supérieure à une hauteur de seuil prédéterminée ($\alpha_T$).

Selon un exemple avantageux de réalisation, on cherche à identifier la présence d'un signal OFDM de durée de symbole OFDM $T_s$ donnée. Le nombre d'échantillons par bloc est alors choisi tel que $P_{opt} \approx 1,5\dfrac{T_s}{T_e}$ où $T_e$, est la période d'échantillonnage.

Selon une variante, on répète le découpage du signal échantillonné en blocs de $P$ échantillons pour une pluralité de valeurs de $P$, on répète le calcul du kurtosis pour ladite pluralité de valeurs de $P$, on calcule les spectres des kurtosis ainsi obtenus, on détermine la hauteur d'un pic spectral ($\alpha_P$) dans chacun de ces spectres ($H_P$) et l'on sélectionne la valeur $P=P_{opt}$ correspondant à la hauteur de pic la plus élevée.

Dans ce cas, pour la valeur $P_{opt}$ sélectionnée, on détermine avantageusement si le pic spectral présente une hauteur ($\alpha_{Popt}$) supérieure à une valeur de seuil prédéterminée ($\alpha_T$).

On peut également déterminer l'espacement entre sous-porteuses du dit signal OFDM à partir de la position du pic spectral dans le spectre du kurtosis obtenu pour la valeur $P_{opt}$ sélectionnée.

On peut enfin déterminer la durée utile d'un symbole OFDM dans ledit signal OFDM à partir de la position du pic spectral dans le spectre du kurtosis obtenu pour la valeur $P_{opt}$ sélectionnée.

## BRÈVE DESCRIPTION DES DESSINS

D'autres caractéristiques et avantages de l'invention apparaîtront à la lecture de modes de réalisation préférentiels de l'invention, en relation avec les figures jointes parmi lesquelles :

La Fig. 1 illustre de manière schématique un signal OFDM ;
La Fig. 2 illustre de manière schématique une fenêtre d'échantillonnage d'un signal OFDM ;
La Fig. 3 représente schématiquement un organigramme de la méthode d'identification d'un signal OFDM selon un mode de réalisation de l'invention ;
La Fig. 4A illustre la variation du kurtosis d'un groupe de symboles estimés par fréquence, pour un signal OFDM s'étant propagé dans un canal BBAG ;
La Fig. 4B montre le spectre du kurtosis de la Fig. 4A ;
La Fig. 5A illustre les variations du kurtosis d'un groupe de symboles estimés par fréquence, pour un signal OFDM s'étant propagé dans un canal de type multi-trajet ;
La Fig. 5B montre le spectre du kurtosis de la Fig. 5A ;
La Fig. 6 représente un exemple de variation de la hauteur du pic du spectre du kurtosis en fonction du rapport de la largeur de la fenêtre d'échantillonnage sur la durée d'un symbole OFDM.

## EXPOSÉ DÉTAILLÉ DE MODES DE RÉALISATION PARTICULIERS

Nous considérerons dans la suite un terminal opportuniste cherchant à identifier un signal OFDM, c'est-à-dire à déterminer si un signal OFDM est présent dans son environnement et, le cas échéant, à obtenir au moins un paramètre de modulation de ce signal. Par paramètre de modulation du signal OFDM nous entendons ici la durée utile du symbole OFDM ($T_u$=$NT_c$) ou de manière équivalente l'espacement entre sous-porteuses ($1/NT_c$), la durée de préfixe ($DT_c$), la durée totale du symbole OFDM ($T_s$=$(N+D)T_c$).

Nous supposerons que, s'il est présent, le signal OFDM a la forme donnée par l'expression (1).

Le terminal opportuniste effectue un échantillonnage du signal reçu en bande de base, la fréquence porteuse étant supposée connue ou appartenant à un ensemble de valeurs discrètes connues. Si $f_e$ =$1/T_e$ est la fréquence d'échantillonnage utilisée, choisie suffisamment élevée pour respecter le critère de Nyquist par rapport à la largeur de bande d'un éventuel signal OFDM. Le signal ainsi échantillonné est découpé en $L$ blocs de $P$ échantillons. Les échantillons du bloc $\ell$ peuvent s'exprimer sous la forme :

$$s_{\ell,a}(p) = s_a(pT_e - \ell PT_e)\Pi_{PT_c}(pT_e - \ell PT_e) \qquad (2)$$

où $\Pi_{PT_e}$ est la fonction fenêtre de largeur $PT_e$ telle que $\Pi_{PTe}(u)$=1 si $0 \leq u < PT_e$ et $\Pi_{PT_e}(u)$=0 sinon, $\ell$ est l'indice de bloc, noté $B_\ell$. La largeur temporelle $PT_e$ d'un bloc est choisie suffisamment grande pour être supérieure aux durées de symbole OFDM couramment utilisées.

La Fig. 2 montre schématiquement les positions relatives des blocs et des symboles OFDM du signal reçu.

Pour un bloc $B_\ell$ donné, on note $T_0$ le temps séparant le début du bloc et le début du premier symbole OFDM contenu dans ce bloc. De manière similaire, on note $T_1$ le temps séparant la fin du bloc et la fin du dernier symbole OFDM contenu dans ce bloc. L'indice $\ell$ a été omis de $T_0$ et $T_1$ pour des raisons de simplification de notation. On comprendra qu'en règle générale les blocs $B_\ell$ ne sont pas synchronisés avec les symboles OFDM.

Une fois le signal échantillonné et découpé en blocs, on effectue une transformée de Fourier de chaque bloc $B_\ell$, typiquement une FFT, pour estimer le symbole d'information porté par la porteuse $f$ de ce bloc, soit :

$$\hat{a}_\ell(f) = \sum_{p=\ell P}^{(\ell+1)P-1} s_a(pT_e)e^{2i\pi pT_e f} \qquad (3)$$

On obtient ainsi une suite de symboles estimés pour chaque fréquence $\hat{a}_\ell(f)$, $\ell$=1,...,$L$ où $L$ est le nombre de blocs successifs considéré.

Nous supposerons ici que les symboles d'information $a_{k,n}$ peuvent être représentés par des variables aléatoires indépendantes et identiquement distribuées. Plus précisément ces variables aléatoires sont alors indépendantes d'un symbole OFDM à l'autre et d'une porteuse à l'autre. Les symboles OFDM peuvent contenir ou non un préfixe, cyclique ou non.

Afin de montrer l'indépendance et la robustesse de la méthode d'identification proposée, nous supposerons que la longueur de préfixe est nulle.

Enfin nous considérerons dans un premier temps un canal gaussien sans bruit, le cas d'un canal réel étant envisagé ensuite.

La méthode d'identification selon l'invention est fondée sur la propriété remarquable suivante :

$$\forall f \in \left[0,1/T_c\right], \text{ si } f + \Delta f \in \left[0,1/T_c\right]$$

on a :

$$\forall \ell, \quad \kappa\left(\hat{a}_\ell(f)\right) = \kappa\left(\hat{a}_\ell(f+\Delta f)\right) + O\left(\frac{1}{N}\right) \qquad (4)$$

où $\kappa(\hat{a}_\ell(f))$ est le kurtosis de $\hat{a}_\ell(f)$ considéré comme variable aléatoire. En d'autres termes, pour une fréquence $f$ donnée, le kurtosis des symboles estimés sur cette fréquence est une fonction presque périodique de presque période $\Delta f$.

La propriété (4) peut se démontrer comme suit :

$$\hat{a}_\ell(f) = \sum_{p=\ell P}^{(\ell+1)P-1} s_a(pT_e)e^{2i\pi pT_e f}$$

$$= \sum_k \frac{1}{N}\sum_{n=0}^{N-1} a_{k,n}e^{-2i\pi n\Delta f kT_s} \sum_{p=\ell P}^{(\ell+1)P-1} s_a(pT_e)e^{-2i\pi pT_e(n\Delta f - f)}g(pT_e - kT_s)$$

$$(5)$$

Le bloc $B_\ell$ n'étant pas synchrone avec les symboles OFDM, il comprendra de manière générale une première partie constituée d'une portion de fin de symbole OFDM d'indice $k_0$, une deuxième partie constituée d'un nombre entier $K \geq 1$ de symboles OFDM d'indices respectifs $k_1,...,k_K$ et une troisième partie constituée d'une portion de début de symbole OFDM d'indice $k_{K+1}$.

En effectuant cette décomposition en trois parties et en introduisant la notation $\tilde{a}_{k,n} = a_{k,n}e^{-2i\pi n\Delta f kT_s}$, l'expression (5) devient :

$$\hat{a}_\ell(f) = \frac{1}{N}\sum_{n=0}^{N-1}\left[\begin{array}{l} \tilde{a}_{k_0,n}\sum_{p=\ell P}^{\ell P + \lfloor T_0/T_e\rfloor}e^{-2i\pi pT_e(n\Delta f - f)} + \sum_{k=k_1}^{k_K}\tilde{a}_{k,n}\sum_{p=0}^{\lfloor T_s/T_e\rfloor - 1}e^{-2i\pi pT_e(n\Delta f - f)} \\ + \tilde{a}_{k_{K+1},n}\sum_{p=(\ell+1)P-\lfloor T_1/T_e\rfloor}^{(\ell+1)P-1}e^{-2i\pi pT_e(n\Delta f - f)} \end{array}\right] \quad (6)$$

où $\lfloor x\rfloor$ est le plus grand entier inférieur ou égal à $x$, soit encore :

$$\hat{a}_\ell(f) = \frac{1}{N}\sum_{n=0}^{N-1}\left[\sum_{k=k_0}^{k_{K+1}}\tilde{a}_{k,n}e^{i\theta_k}\Lambda_{k,n}(f)\right] \quad (7)$$

avec :

$$\Lambda_{k,n}(f) = \frac{\sin(\pi T_s(n\Delta f - f))}{\sin(\pi T_e(n\Delta f - f))}, \quad k = k_1,...,k_K \quad (8)$$

$$\Lambda_{k_0,n}(f) = \frac{\sin(\pi T_0(n\Delta f - f))}{\sin(\pi T_e(n\Delta f - f))} \quad \text{et} \quad \Lambda_{k_{K+1},n}(f) = \frac{\sin(\pi T_1(n\Delta f - f))}{\sin(\pi T_e(n\Delta f - f))}$$

et où $e^{i\theta_k}$ est un terme de phase.

Le kurtosis des symboles estimés est donné par définition par :

$$\kappa\big(\hat{a}_\ell(f)\big) = \frac{cum_4\big(\hat{a}_\ell(f)\big)}{\left\{E\big(|\hat{a}_\ell(f)|^2\big)\right\}^2} \tag{9}$$

où $cum_4(\hat{a}_\ell(f))$ est le moment d'ordre 4 (cumulant d'ordre 4) de $\hat{a}_\ell(f)$ et $E(|\hat{a}_\ell(f)|^2)$ est la variance de $\hat{a}_\ell(f)$ (de moyenne nulle).

Le numérateur de l'expression (9) peut encore être écrit sous la forme :

$$cum_4\big(\hat{a}_\ell(f)\big) = cum_4\left(\frac{1}{N}\sum_{n=0}^{N-1}\left[\sum_{k=k_0}^{k_{K+1}}\widetilde{a}_{k,n}e^{i\theta_k}\Lambda_{k,n}(f)\right]\right)$$

$$= \frac{1}{N^4}\sum_{n^{(1)},n^{(2)},n^{(3)},n^{(4)}}\left(\sum_{k^{(1)},k^{(2)},k^{(3)},k^{(4)}}\widetilde{\Lambda}_{k^{(1)},n^{(1)}}(f)\widetilde{\Lambda}^*_{k^{(2)},n^{(2)}}(f)\widetilde{\Lambda}_{k^{(3)},n^{(3)}}(f)\widetilde{\Lambda}^*_{k^{(4)},n^{(4)}}(f)\right.$$
$$\left. E\big(\widetilde{a}_{k^{(1)},n^{(1)}},\widetilde{a}^*_{k^{(2)},n^{(2)}},\widetilde{a}_{k^{(3)},n^{(3)}},\widetilde{a}^*_{k^{(4)},n^{(4)}}\big)\right)$$

$$(10)$$

où l'on a distingué par commodité $n^{(i)}$ et $k^{(i)}$, $i = 1,..,4$ les quatre indices $n$ et $k$ intervenant dans le calcul du moment et où $\widetilde{\Lambda}_{k,n}(f) = e^{i\theta_k}\Lambda_{k,n}(f)$.

Etant donné que les symboles d'information sont des variables aléatoires indépendantes d'un symbole à l'autre et d'une sous-porteuse à l'autre, tous les termes croisés de l'expression (10) sont nuls et le cumulant d'ordre 4 se simplifie sous la forme :

$$cum_4\big(\hat{a}_\ell(f)\big) = cum_4\big(\widetilde{a}_\ell(f)\big)\left(\frac{1}{N^4}\sum_{n=0}^{N-1}\sum_{k=k_0}^{k_{K+1}}|\Lambda_{k,n}(f)|^4\right) \tag{11}$$

De manière similaire le dénominateur de l'expression (9) peut s'écrire sous la forme :

$$E\big(|\hat{a}_\ell(f)|^2\big) = E\big(|\widetilde{a}|^2\big)\left(\frac{1}{N^2}\sum_{n=0}^{N-1}\sum_{k=k_0}^{k_{K+1}}|\Lambda_{k,n}(f)|^2\right) \tag{12}$$

Des expressions (11) et (12) on déduit alors le kurtosis :

$$\kappa\big(\hat{a}_\ell(f)\big) = \kappa(\widetilde{a})\frac{\left(\sum_{n=0}^{N-1}\sum_{k=k_0}^{k_{K+1}}|\Lambda_{k,n}(f)|^4\right)}{\left(\sum_{n=0}^{N-1}\sum_{k=k_0}^{k_{K+1}}|\Lambda_{k,n}(f)|^2\right)^2} \tag{13}$$

Etant donné que $\kappa(\widetilde{a}) = \kappa(a)$, on peut désormais vérifier si la propriété (4) est satisfaite :

$$\kappa\left(\hat{a}_{\ell}\left(f+\Delta f\right)\right)=\kappa(a)\frac{\left(\sum_{n=0}^{N-1}\sum_{k=k_0}^{k_{K+1}}\left|\Lambda_{k,n}\left(f+\Delta f\right)\right|^4\right)}{\left(\sum_{n=0}^{N-1}\sum_{k=k_0}^{k_{K+1}}\left|\Lambda_{k,n}\left(f+\Delta f\right)\right|^2\right)^2} \qquad (14)$$

C'est-à-dire, compte tenu de l'expression (8) de $\Lambda_{k,n}(f)$ :

$$\kappa\left(\hat{a}_{\ell}\left(f+\Delta f\right)\right)=\kappa(a)\frac{\left(\sum_{n=-1}^{N-2}\sum_{k=k_0}^{k_{K+1}}\left|\Lambda_{k,n}\left(f\right)\right|^4\right)}{\left(\sum_{n=-1}^{N-2}\sum_{k=k_0}^{k_{K+1}}\left|\Lambda_{k,n}\left(f\right)\right|^2\right)^2} \qquad (15)$$

et enfin :

$$\kappa\left(\hat{a}_{\ell}\left(f+\Delta f\right)\right)=\kappa(a)\frac{\left(\sum_{k=k_0}^{k_{K+1}}\sum_{n=0}^{N-1}\left|\Lambda_{k,n}\left(f\right)\right|^4\left(1+\varepsilon_k^{(4)}\right)\right)}{\left(\sum_{k=k_0}^{k_{K+1}}\sum_{n=0}^{N-1}\left|\Lambda_{k,n}\left(f\right)\right|^2\left(1+\varepsilon_k^{(2)}\right)\right)^2} \qquad (16)$$

avec $\varepsilon_k^{(i)}=\dfrac{\left|\Lambda_{k,-1}\left(f\right)\right|^i-\left|\Lambda_{k,N-1}\left(f\right)\right|^i}{\sum_{n=0}^{N-1}\left|\Lambda_{k,n}\left(f\right)\right|^i}$ , $i=2,4$ .

On comprendra que les $\varepsilon_k^{(i)}$ sont des termes de bord et que lorsque $N$ tend vers l'infini, on a bien la propriété $\kappa(\hat{a}_{\ell}(f+\Delta f))=\kappa(\hat{a}_{\ell}(f))$.

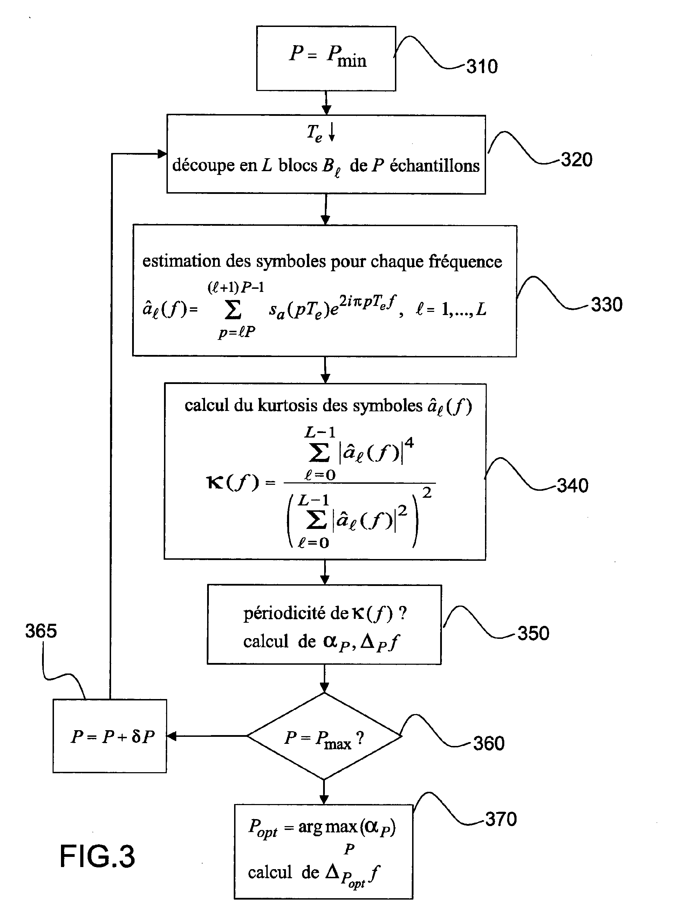

La Fig. 3 représente schématiquement l'organigramme de la méthode d'identification de signal OFDM selon un mode de réalisation de l'invention.

On suppose que la fréquence d'échantillonnage du signal reçu en bande de base est choisie pour être largement supérieure aux fréquences de bribe $1/T_c$ couramment utilisées.

A l'étape 310, on choisit la largeur $P$ des fenêtres d'échantillonnage, libellée en nombre d'échantillons, autrement dit la largeur temporelle $PT_e$ des blocs de découpage du signal reçu. Dans le cas où l'on veut vérifier la présence d'un signal OFDM particulier, ayant une durée symbole $T_s$ donnée, on choisira avantageusement :

$$P=\left\lfloor\lambda\frac{T_s}{T_e}\right\rfloor \qquad (18)$$

où $\lambda$ est un nombre réel positif, de préférence supérieur à 1, et de manière avantageuse entre 1.2 et 1.7, par exemple $\lambda$=1.5 comme nous le verrons plus loin. Toutefois, de manière générale, on peut procéder entièrement en aveugle, c'est-à-dire sans connaissance préalable de la ou des valeur(s) possible(s) de $T_s$, auquel cas l'on choisit une valeur de $P$ suffisamment élevée.

A l'étape 320, on échantillonne le signal reçu et on le découpe en blocs de $P$ échantillons consécutifs. On suppose que le nombre de blocs ainsi acquis est $L$.

A l'étape 330, pour une pluralité de fréquences $f = f_0,.., f_J$, par exemple pour des fréquences $j_f= j\delta f$, $j = 0,...,J-1$ où $\delta f$ est un pas d'échantillonnage fréquentiel, choisi suffisamment faible par rapport à l'intervalle entre sous-porteuses des signaux OFDM usuels, on estime par transformée de Fourier inverse, typiquement au moyen d'une IFFT, les symboles portés par cette fréquence, soit d'après (3) : $\hat{a}_\ell(f) = \sum_{p=\ell P}^{(\ell+1)P-1} s_a(pT_e)e^{2i\pi pT_e f}$ où $s_a(t)$ est le signal reçu en bande de base. Pour chaque fréquence $f$, on obtient ainsi une séquence de symboles $\hat{a}_\ell(f)$, $\ell=1,...,L$.

A l'étape 340, on calcule, pour chaque fréquence $f$, le kurtosis des symboles estimés à cette fréquence, au moyen de l'expression suivante, définie à une constante près :

$$\kappa(f) = \frac{\sum_{\ell=0}^{L-1}\left|\hat{a}_\ell(f)\right|^4}{\left(\sum_{\ell=0}^{L-1}\left|\hat{a}_\ell(f)\right|^2\right)^2} \qquad (19)$$

Comme on l'a vu plus haut, si un signal OFDM est présent dans le signal reçu avec un intervalle entre sous-porteuses de $\Delta f$, le kurtosis $\kappa(f)$ est une fonction presque périodique de presque-période $\Delta f$.

A l'étape 350, on détermine si le kurtosis $\kappa(f)$ présente effectivement une telle périodicité. Par exemple, on calcule la transformée de Fourier du kurtosis $\kappa(f)$ auquel on a préalablement retranché sa composante continue, soit :

$$H_P = TF(\kappa(f) - \overline{\kappa}) \qquad (20)$$

et l'on détermine s'il existe un pic dans le spectre ainsi obtenu.

L'homme du métier comprendra que d'autres méthodes de détermination de la périodicité du kurtosis peuvent être employées, notamment à partir du maximum de la fonction d' autocorrélation de $\kappa(f)$.

La période ou presque-période ainsi déterminée est notée $\Delta_P f$ et la hauteur du pic spectral ou du maximum de la fonction d'autocorrélation est noté(e) $\alpha_P$.

On pourra utiliser un seuil de détection dans la recherche de la périodicité, par exemple pour déterminer si le pic du spectre ou le maximum de la fonction d'autocorrélation du kurtosis est bien significatif. D'autres critères de détection de la périodicité du kurtosis pourront être envisagés sans pour autant sortir du cadre de la présente invention.

Si aucun signal OFDM n'est présent, le spectre $H_P$ ne présente pas de pic significatif et aucune périodicité n'est détectée dans le kurtosis des symboles estimés.

Selon une première variante, la méthode d'identification s'arrête à cette étape. Ce sera notamment le cas lorsque l'on souhaite simplement vérifier si un signal OFDM ayant une durée symbole donnée $T_s$ est présent ou non dans le signal reçu.

Selon une seconde variante, avantageusement utilisée en mode entièrement aveugle, on balaie une plage de largeurs de fenêtre d'échantillonnage d'une valeur minimale $P_{min}$ à une valeur maximale $P_{max}$.

Pour ce faire, on teste à l'étape 360 si $P=P_{max}$. Dans la négative, on incrémente en 365 la largeur de la fenêtre d'échantillonnage, $P=P+\delta P$, où $\delta P$ est un entier supérieur ou égal à 1, puis l'on retourne à l'étape 320. En revanche, dans l'affirmative, la méthode d'identification se poursuit en 370.

On détermine en 370 la largeur de bloc $P_{opt}$ ayant fourni la hauteur de pic spectral la plus élevée ou le maximum de la valeur d'autocorrélation, c'est-à-dire $P_{opt} = \arg\max_P(\alpha_P)$. La période ou presque-période est alors donnée

par $\Delta_{Popt}f$.

Comme précédemment, on pourra utiliser un seuil de détection $\alpha_T$ pour conclure ou non à la présence d'un signal OFDM. Par exemple, on pourra comparer la valeur la plus élevée de hauteur de pic spectral, à savoir $\alpha_{Popt}$, avec cette valeur de seuil et ne conclure à la présence d'un signal OFDM que si $\alpha_{Popt} > \alpha_T$.

Quelle que soit la variante utilisée, la méthode d'identification fournit la période $\Delta f$ et/ou la durée utile correspondante de symboles OFDM.

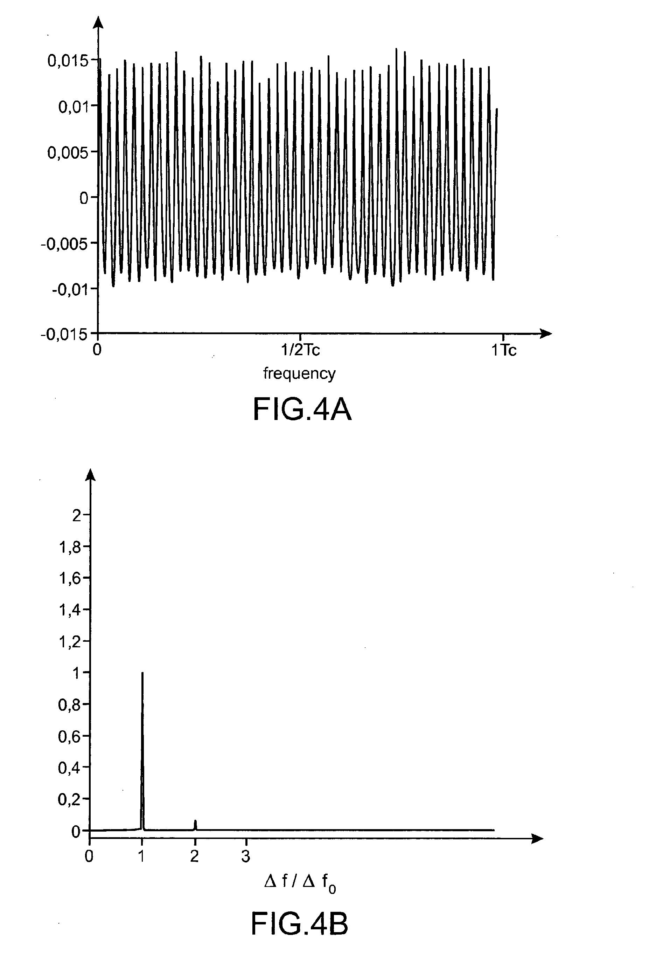

La Fig. 4A représente la variation du kurtosis $\kappa(f)$ d'un groupe de symboles estimés pour chaque fréquence $f$, dans le cas d'un signal OFDM s'étant propagé dans un canal à bruit additif blanc gaussien (BBAG). On remarque l'allure périodique de la fonction $\kappa(f)$ symptomatique de la présence d'un signal OFDM.

La Fig. 4B représente le spectre du kurtosis de la Fig. 4A. On a fait figurer en abscisses la variable normalisée $\Delta f/\Delta f_0$ où $\Delta f_0$ est l'espacement entre sous-porteuses du signal OFDM effectivement présent dans le signal reçu. On note la présence d'un pic marqué en $\Delta f/\Delta f_0 = 1$, ce qui signifie d'une part qu'un signal OFDM a bien été identifié dans le signal reçu et, d'autre part que son espacement inter-porteuse/durée utile de symbole OFDM a été correctement estimé(e).

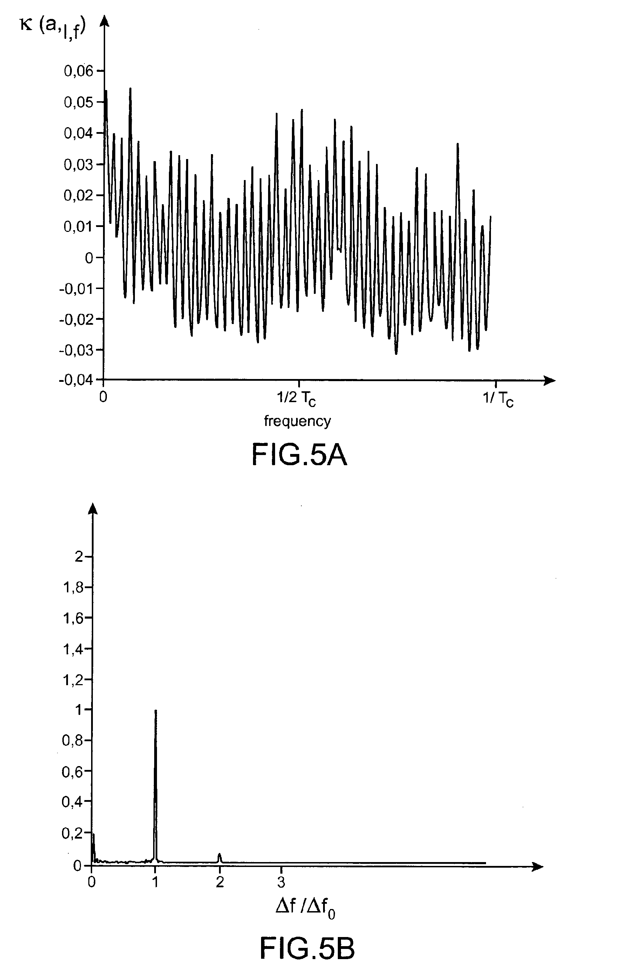

La Fig. 5A représente la variation du kurtosis $\kappa(f)$ d'un groupe de symboles estimés pour chaque fréquence $f$, dans le cas d'un signal OFDM s'étant propagé dans un canal multi-trajet. On remarque que l'allure de la courbe est sensiblement plus perturbée que celle de la Fig. 4A mais qu'elle présente néanmoins des variations périodiques.

La Fig. 5B représente le spectre du kurtosis de la Fig. 5A. Là encore, on a fait figurer en abscisses la variable normalisée $\Delta f/\Delta f_0$. On observe la présence d'un pic en $\Delta f/\Delta f_0 = 1$ avec les mêmes conclusions que précédemment, ce qui montre bien la robustesse de la méthode d'identification.

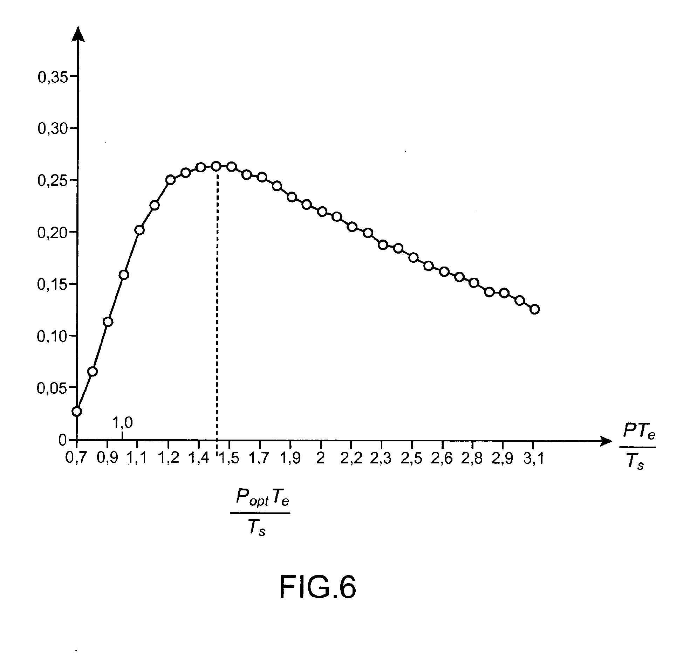

La Fig. 6 représente la hauteur du pic spectral $\alpha_P$ en fonction du rapport $\dfrac{PT_e}{T_s}$ entre la largeur des blocs de découpage et la durée du symbole OFDM, $T_s$.

On observe sur la figure que le pic spectral le plus prononcé est obtenu lorsque $\dfrac{PT_e}{T_s} \approx 1,5$, autrement dit

$$P_{opt} \approx 1,5 \frac{T_s}{T_e} \,.$$ Ainsi, lorsqu' il s'agit de déterminer si un signal OFDM de durée symbole $T_s$ est présent ou non, on choisira avantageusement $P = P_{opt}$.

**Revendications**

1. Méthode d'identification d'un signal de type OFDM contenu dans un signal reçu *par un système de télécommunication*, selon laquelle on échantillonne le signal reçu et on le découpe en blocs de $P$ échantillons, chaque bloc ($B_\ell$) étant ensuite soumis à une transformée de Fourier pour obtenir une pluralité de symboles ($\hat{a}_\ell(f)$) à une pluralité de fréquences, **caractérisée en ce que**, pour chaque fréquence de ladite pluralité de fréquences, on calcule le kurtosis ($\kappa(f)$) d'un ensemble de symboles ($\hat{a}_\ell(f), \ell = 1,...,L$) ainsi obtenus à cette fréquence, puis l'on détermine si ledit kurtosis présente une périodicité dans le domaine fréquentiel à partir des valeurs de kurtosis calculées pour les fréquences de ladite pluralité, et l'on identifie la présence d'un signal OFDM dans le signal reçu si le kurtosis présente une telle périodicité.

2. Méthode d'identification selon la revendication 1, **caractérisée en ce que** pour déterminer si ledit kurtosis présente une périodicité dans le domaine fréquentiel, on calcule son spectre et l'on détermine si celui-ci présente un pic spectral pour une valeur de période ($\Delta f$).

3. Méthode d'identification selon la revendication 2, **caractérisée en ce que** l'on retranche au kurtosis sa valeur moyenne ($\bar{\kappa}$) et que l'on calcule la transformée de Fourier du kurtosis ainsi centré, un pic spectral étant détecté si sa hauteur ($\alpha_P$) est supérieure à une hauteur de seuil prédéterminée ($\alpha_T$).

4. Méthode d'identification selon l'une des revendications précédentes, **caractérisée en ce que** l'on cherche à identifier la présence d'un signal OFDM de durée de symbole OFDM $T_s$ donnée et que le nombre d'échantillons par bloc est choisi tel que $P_{opt} \approx 1,5 \dfrac{T_s}{T_e}$ où $T_e$ est la période d'échantillonnage.

**5.** Méthode d'identification selon la revendication 1, **caractérisée en ce qu'**on répète le découpage du signal échantillonné en blocs de $P$ échantillons pour une pluralité de valeurs de $P$, que l'on répète le calcul du kurtosis pour ladite pluralité de valeurs de $P$, que l'on calcule les spectres des kurtosis ainsi obtenus, que l'on détermine la hauteur d'un pic spectral $(\alpha_P)$ dans chacun de ces spectres $(H_P)$ et que l'on sélectionne la valeur $P=P_{opt}$ correspondant à la hauteur de pic la plus élevée.

**6.** Méthode d'identification selon la revendication 5, **caractérisée en ce que**, pour la valeur $P_{opt}$ sélectionnée, l'on détermine si le pic spectral présente une hauteur $(\alpha_{P_{opt}})$ supérieure à une valeur de seuil prédéterminée $(\alpha_T)$.

**7.** Méthode selon la revendication 5 ou 6, **caractérisée en ce que** l'on détermine l'espacement entre sous-porteuses du dit signal OFDM à partir de la position du pic spectral dans le spectre du kurtosis obtenu pour la valeur $P_{opt}$ sélectionnée.

**8.** Méthode d'identification selon l'une des revendications 5 ou 6, **caractérisée en ce que** l'on détermine la durée utile d'un symbole OFDM dans ledit signal OFDM à partir de la position du pic spectral dans le spectre du kurtosis obtenu pour la valeur $P_{opt}$ sélectionnée.

**Claims**

**1.** A method for identifying an OFDM type signal contained in a signal received by a telecommunication system, wherein the received signal is sampled and cut off into blocks of $P$ samples, each block $(B_\ell)$ being then subjected to a Fourier transform to obtain a plurality of symbols $(\hat{a}_\ell(f))$ at a plurality of frequencies, **characterised in that**, for each frequency of said plurality of frequencies, the kurtosis $(\kappa(f))$ of the set of symbols $(\hat{a}_\ell(f), \ell=1,...,L)$ thus obtained at this frequency is calculated, and then it is determined whether said kurtosis has a periodicity in frequency domain from kurtosis values calculated for the frequencies of said plurality, and the presence of an OFDM signal is identified in the received signal if the kurtosis has such a periodicity.

**2.** The identification method according to claim 1, **characterised in that** to determine whether said kurtosis has a periodicity in the frequency domain, its spectrum is calculated and is determined whether it has a spectrum peak for a value having a period $(\Delta f)$.

**3.** The identification method according to claim 2, **characterised in that** the average value $(\bar{\kappa})$ of the kurtosis is subtracted therefrom and the Fourier Transform of the kurtosis thus centred is calculated, a spectrum peak being detected if its height $(a_P)$ is higher than a predetermined threshold.

**4.** The identification method according to one of the preceding claims, **characterised in that** it is attempted to identify the presence of an OFDM signal having a given OFDM symbol duration $T_s$ and that the number of samples per block is selected such that $P_{opt} \approx 1,5 \dfrac{T_s}{T_e}$ where $T_e$ is the sampling period.

**5.** The identification method according to claim 1, **characterised in that** the cutting off of the signal sampled into blocks of $P$ samples is repeated for a plurality of values of $P$, the kurtosis calculation is repeated for said plurality of values of $P$, the kurtosis spectra thus obtained is calculated, the spectrum peak height $(\alpha_P)$ is determined in each of these spectra $(H_P)$ and the value $P=P_{opt}$ corresponding to the highest peak height is selected.

**6.** The identification method according to claim 5, **characterised in that**, for the selected $P_{opt}$ value, it is determined whether the spectrum peak has a height $(\alpha_{P_{opt}})$ higher than a predetermined threshold value $(\alpha_T)$.

**7.** The method according to claim 5 or 6, **characterised in that** the subcarrier spacing of said OFDM signal is determined from the position of the spectrum in the kurtosis spectrum obtained for the selected $P_{opt}$ value.

8. The identification method according to one of claims 5 or 6, **characterised in that** the useful duration of an OFDM symbol in said OFDM signal is determined from the position of the spectrum peak in the kurtosis spectrum obtained for the selected $P_{opt}$ value.

**Patentansprüche**

1. Verfahren zur Identifizierung eines Signals vom OFDM-Typ, das in einem Signal enthalten ist, welches von einem Telekommunikationssystem empfangen wird, wobei man das empfangene Signal abtastet und es in Blöcke von P Abtastwerten unterteilt, wobei jeder Block ($B_l$) anschließend einer FourierTransformation unterzogen wird, um eine Mehrzahl von Symbolen ($â_l$(f) bei einer Mehrzahl von Frequenzen zu erhalten, **dadurch gekennzeichnet, dass** man für jede Frequenz der Mehrzahl von Frequenzen die Kurtosis ($\kappa$ (f)) einer Gesamtheit von Symbolen ($â_l$(f), l=1,...,L) berechnet, die derart bei dieser Frequenz erhalten wurden, man dann ausgehend von den für die Frequenzen der Mehrzahl berechneten Kurtosiswerten bestimmt, ob die Kurtosis eine Periodizität in der Frequenzdomäne aufweist, und man das Vorhandensein eines OFDM-Signals in dem empfangenen Signal identifiziert, wenn die Kurtosis eine solche Periodizität aufweist.

2. Verfahren zur Identifizierung nach Anspruch 1, **dadurch gekennzeichnet, dass** man zur Bestimmung, ob die Kurtosis eine Periodizität in der Frequenzdomäne aufweist, ihr Spektrum berechnet und bestimmt, ob dieses für einen Periodenwert ($\Delta$f) einen spektralen Peak aufweist.

3. Verfahren zur Identifizierung nach Anspruch 2, **dadurch gekennzeichnet, dass** man von der Kurtosis ihren Mittelwert ($\overline{\kappa}$) abzieht und dass man die Fourier-Transformierte der derart zentrierten Kurtosis berechnet, wobei ein spektraler Peak detektiert wird, wenn seine Höhe ($\alpha_P$) größer ist als eine vorbestimmte Schwellenhöhe ($\alpha_T$).

4. Verfahren zur Identifizierung nach einem der vorhergehenden Ansprüche, **dadurch gekennzeichnet, dass** man versucht, das Vorhandensein eines OFDM-Signals mit gegebener OFDM-Symboldauer $T_S$ zu identifizieren, und dass die Zahl von Abtastwerten pro Block derart gewählt wird, dass $P_{opt} \approx 1{,}5 \dfrac{T_S}{T_e}$ , wobei $T_e$ die Abtastperiode ist.

5. Verfahren zur Identifizierung nach Anspruch 1, **dadurch gekennzeichnet, dass** man die Unterteilung des abgetasteten Signals in Blöcke mit P Abtastwerten für eine Mehrzahl von Werten von P wiederholt, dass man die Berechnung der Kurtosis für die Mehrzahl von Werten von P wiederholt, dass man die Spektren der derart erhaltenen Kurtosis berechnet, dass man die Höhe eines spektralen Peaks ($\alpha_P$) in jedem dieser Spektren ($H_P$) bestimmt, und dass man den Wert P=$P_{opt}$ auswählt, der der größten Peakhöhe entspricht.

6. Verfahren zur Identifizierung nach Anspruch 5, **dadurch gekennzeichnet, dass** man für den ausgewählten Wert $P_{opt}$ bestimmt, ob der spektrale Peak eine Höhe $\alpha_{Popt}$ aufweist, die größer ist als ein vorbestimmter Schwellenwert ($\alpha_T$).

7. Verfahren nach Anspruch 5 oder 6, **dadurch gekennzeichnet, dass** man den Abstand zwischen Unterträgern des OFDM-Signals ausgehend von der Position des spektralen Peaks in dem Spektrum der Kurtosis bestimmt, das für den ausgewählten Wert $P_{opt}$ erhalten wurde.

8. Verfahren zur Identifizierung nach einem der Ansprüche 5 oder 6, **dadurch gekennzeichnet, dass** man die Nutzdauer eines OFDM-Symbols in dem OFDM-Signal ausgehend von der Position des spektralen Peaks in dem Spektrum der Kurtosis bestimmt, das für den ausgewählten Wert $P_{opt}$ erhalten wurde.

$$T_{prefix} = DT_c$$

$$T_u = NT_c$$

$$T_s = (N+D)T_c$$

## FIG.1

$B_{\ell-1}$  $B_\ell$  $B_{\ell+1}$

$T_0$  $T_s$  $T_1$

$PT_e$

## FIG.2

$$P = P_{\min}$$ 310

$$T_e \downarrow$$
découpe en $L$ blocs $B_\ell$ de $P$ échantillons  320

estimation des symboles pour chaque fréquence

$$\hat{a}_\ell(f) = \sum_{p=\ell P}^{(\ell+1)P-1} s_a(pT_e)e^{2i\pi pT_e f}, \quad \ell = 1,...,L$$  330

calcul du kurtosis des symboles $\hat{a}_\ell(f)$

$$\kappa(f) = \frac{\sum\limits_{\ell=0}^{L-1} |\hat{a}_\ell(f)|^4}{\left(\sum\limits_{\ell=0}^{L-1} |\hat{a}_\ell(f)|^2\right)^2}$$  340

périodicité de $\kappa(f)$ ?
calcul de $\alpha_P, \Delta_P f$  350

365

$$P = P + \delta P$$

$P = P_{\max}$ ?  360

$$P_{opt} = \underset{P}{\arg\max}(\alpha_P)$$
calcul de $\Delta_{P_{opt}} f$  370

FIG.3

FIG.4A

$\Delta f / \Delta f_0$

FIG.4B

FIG.5A

FIG.5B

FIG.6

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **A. BOUZEGZI et al.** A second order statistics based algorithm for blind recognition of OFDM based systems. *IEEE Global Telecommunications Conference,* Novembre 2008

- **A. BOUZEGZI et al.** A fourth-order algorithm for characterization of OFDM signals. *IEEE Workshop on Signal Processing Advances in Wireless Communications,* Juillet 2008